# EUROPÄISCHE PATENTSCHRIFT

(11) **EP 0 728 516 B1**
(45) Veröffentlichungstag und Bekanntmachung des Hinweises auf die Patenterteilung: **10.11.1999**
(21) Anmeldenummer: 96102480.9
(22) Anmeldetag: 19.02.1996
(51) Int. Cl.: B01D 53/047

(54) **Druckwechseladsorptionsverfahren**
Pressure swing adsorption process
Procédé d'adsorption à pression alternée

(30) Priorität: 27.02.1995 DE 19506762
(43) Veröffentlichungstag der Anmeldung: 28.08.1996
(73) Patentinhaber: Linde Aktiengesellschaft, 65189 Wiesbaden (DE)
(72) Erfinder: Benkmann, Christian, Dipl.-Ing., D-82166 Gräfelfing (DE)
(74) Vertreter: Zahn, Christoph

(56) Entgegenhaltungen:
- EP-A- 0 011 872
- EP-A- 0 086 435

## Beschreibung

Die Erfindung betrifft ein kontinuierliches Druckwechseladsorptionsverfahren, mit mindestens zwei phasenverschoben arbeitenden Adsorptionseinheiten, wobei jede Adsorptionseinheit abwechselnd in den Arbeitszuständen "Adsorption" und "Desorption" mit einer oder mehreren zwischengeschalteten Druckausgleichs - und/oder Spülphasen betrieben wird.

Beim Betrieb von Druckwechseladsorptionsanlagen kommt es von Zeit zu Zeit vor, daß aufgrund einer Ventilstörung oder eines undichten Ventils derjenige Adsorber, zu dem das gestörte oder undichte Ventil gehört, außer Betrieb genommen und die Druckwechseladsorptionsanlage mit einer verminderten Adsorberanzahl weiter betrieben werden muß.

Aus der EP-A 0 006 138 ist ein kontinuierliches Druckwechseladsorptionsverfahren bekannt, bei dem eine Vielzahl von Ventilen nach einem vorgegebenen ersten Taktschema geschaltet werden. Während des kontinuierlichen Betriebes kann ein defektes Ventil durch Vergleich von charakteristischen physikalischen Meßwerten mit vorgegebenen Sollwerten in mehreren aufeinander folgenden Taktschritten ermittelt werden. Ist das defekte Ventil ermittelt, wird auf ein zweites vorgegebenes Taktschema unter Auslassung derjenigen Adsorptionseinheit, zu der das defekte Ventil gehört, umgeschaltet. EP-A-0011872 beschreibt ein ähnliches Verfahren, wobei im Falle eines defektes Ventils der zugehörige Adsorber abgeblockt wird.

Trotz dieser Verfahrensführungen führt das Abschalten eines Adsorbers bei Ventilstörungen zu teilweise starken Prozeßstörungen, die auch bei der Wiederinbetriebnahme des abgeschalteten Adsorbers nach der erfolgten Ventilreparatur auftreten. Die Betriebsweise mit verminderter Adsorberzahl hat zur Folge, daß nur mit geringerer Rohgasmenge und damit bei verminderter Produktion gearbeitet werden kann.

Um derartige Prozeßstörungen zu vermeiden, wurden bereits Druckwechseladsorptionsanlagen realisiert, bei denen zusätzliche Adsorber eingebaut werden. Diese zusätzlichen Adsorber "laufen" im normalen Betrieb mit, dienen jedoch nur als Reserve. Im Fall einer Ventilstörung kann dann die Druckwechseladsorptionsanlage mit voller Produktionskapazität weiter betrieben werden. So werden z.B. Druckwechseladsorptionsanlagen mit 5 Adsorbern ausgestattet, wobei das Druckwechseladsorptionsverfahren so ausgelegt ist, daß bereits beim Betrieb von lediglich 4 Adsorbern die volle Produktmenge erreicht wird. So wird die Druckwechseladsorptionsanlage, solange 5 Adsorber im Betrieb sind in einem 5/2/1-Verfahren betrieben, wobei die erste Zahl für die Anzahl der Adsorber, die zweite Zahl für die Anzahl der Adsorber die sich gleichzeitig im Adsorptionstakt befinden und die dritte Zahl für die Druckausgleichstakte steht. Bei einer Ventilstörung und damit verbunden dem Abschalten eines Adsorbers wird von diesem 5/2/1-Verfahren auf ein 4/1/1-Verfahren zurückgeschaltet. Die Adsorberbehälter werden dazu strömungsmäßig so dimensioniert, daß die volle Einsatzgasmenge auch durch nur einen Adsorberbehälter strömen kann, statt wie im "Normalbetrieb" durch zwei parallele Adsorberbehälter. Bei größeren Druckwechseladsorptionsanlagen werden oft 12/4/4-Verfahren realisiert, bei denen zwei der Adsorber als Reserveadsorber vorgesehen sind, so daß ohne Einschränkungen auf ein 10/2/4-Verfahren zurückgeschaltet werden kann. Diese zusätzlich benötigten Reserveadsorber sind jedoch vergleichsweise teuer, so daß sie in der Regel nur bei denjenigen Druckwechseladsorptionsverfahren Verwendung finden, bei denen eine Minderung der Produktion unerwünscht ist.

Aufgabe der vorliegenden Erfindung ist es, ein Verfahren anzugeben, daß die genannten Nachteile des Standes der Technik vermeidet.

Dies wird erfindungsgemäß dadurch erreicht, daß beim Ausfall eines für eine Druckausgleichs - und/oder Spülphase benötigten Ventils, die zu diesem Ventil gehörende Ventillinie außer Betrieb genommen und die Anzahl der Druckausgleichs - und/oder Spülphasen um eine Phase reduziert wird.

Gemäß dem Erfindungsgedanken wird bei einem als defekt erkannten Ventil einer Druckausgleichs- und/oder Spülleitung nicht der zu dieser Ventillinie gehörige Adsorber, sondern die defekte Ventillinie außer Betrieb genommen. Einhergehend damit wird die Anzahl der Druckausgleichs- und/oder Spülphasen um eins reduziert. Bei einem, wie oben bereits erwähnt, 12/4/4-Druckwechseladsorptionsverfahren wird dann also auf ein 12/4/3-Druckwechseladsorptionsverfahren zurückgeschaltet. Hierbei kann die Zufuhr der Rohgasmenge konstant bleiben. Lediglich die Produktgasmenge verringert sich geringfügig aufgrund einer Verringerung der Ausbeute der zu gewinnenden Gaskomponente. Tritt nun innerhalb einer Druckwechseladsorptionsanlage, die gemäß dem erfindungsgemäßen Verfahren arbeitet, eine weitere Ventilstörung in einer der Druckausgleichs- und/oder Spülleitungen auf, so kann nach der Außer-Betriebnahme der entsprechenden Ventillinie die Anzahl der Druckausgleichs- und/oder Spülphasen wiederum um eine Phase reduziert werden. Das erfindungsgemäße Druckwechseladsorptionsverfahren weist gegenüber den bekannten Verfahren den Vorteil auf, daß weder ein Reserveadsorber vorgesehen ist, noch eine wesentliche Verringerung der Produktgasmenge während einer Ventilstörung in Kauf genommen werden muß.

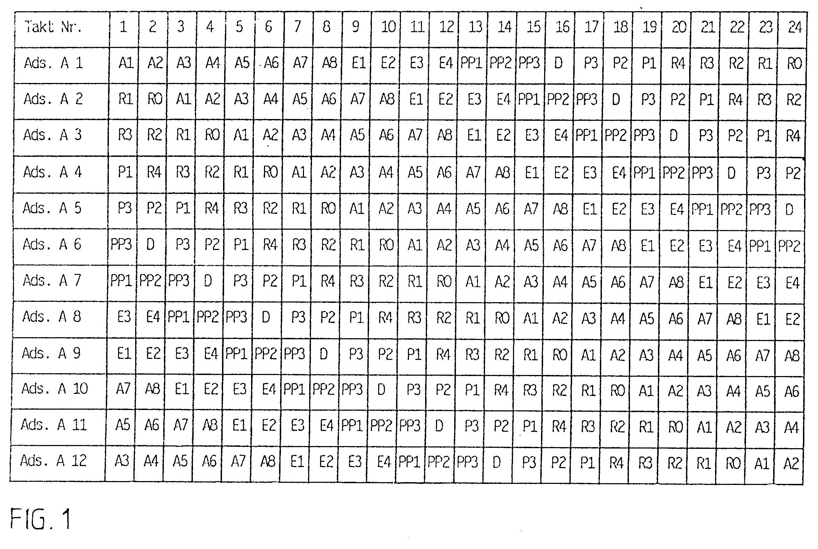

Im folgenden sei das erfindungsgemäße Druckwechseladsorptionsverfahren anhand von 3 Taktschemata (Figuren 1, 2 und 3) näher erläutert:

Hierbei bedeuten:
- A :: Adsorptionsphase
- E :: Entspannungsphase, wobei das Entspannungsgas einem Adsorber, der sich in der Bespannungsphase befindet, zugeführt wird
- PP :: Purgegas-Bereitstellungsphase
- D :: Dump-Phase
- P :: Spülphase, wobei das Spülgas von einem Adsorber, der sich in der Spülgasbereitstellungsphase befindet, geliefert wird
- R :: Bespannungsphase, wobei das dafür notwendige Gas von einem Adsorber, der sich in der Entspannungsphase befindet, bereit gestellt wird

Figur 1 zeigt das Taktschema eines 12/4/4-Druckwechseladsorptionsverfahrens. Jeder Arbeitszyklus ist in insgesamt 24 Takte unterteilt. Anhand des Adsorbers A1 sei zunächst der Ablauf eines Arbeitszyklusses näher erläutert. Der Adsorber durchläuft zunächst eine 8-taktige Adsorptionsphase A1 bis A8, woraufhin er über 4 Takte entspannt wird (E1 bis E4). Die während dieser Entspannungstakte anfallenden Entspannungsgase werden den jeweiligen, in der Bespannungsphase befindlichen Adsorbern zugeführt. So wird das im neunten Arbeitstakt des Adsorbers A1 während der Entspannungsphase E1 entnommene Entspannungsgas dem Adsorber A6 zum Bespannen (R1) zugeführt. Nach Beendigung der 4 Entspannungstakte, durchläuft der Adsorber A1 3 Takte, in denen er zur Spülgasbereitstellung für zu spülende Adsorber verwendet wird. Das im Adsorber A1 im Arbeitstakt PP1 anfallende Gas wird in diesem Fall dem Adsorber A10 als Spülgas aufgegeben. Nach Beendigung dieser Spülgasbereitstellungstakte erfolgt ein sog. Dump-Takt, dem sich drei Spültakte (P3 bis P1) anschließen. Nach Beendigung der Spülphase wird der Adsorber A1 in den Arbeitstakten R4 bis R1 mittels der Entspannungsgase anderer Adsorber wieder bespannt. Vor Beginn der eigentlichen Adsorptionsphase erfolgt ein letzter Bespannungstakt (R0) mit dem Einsatzgas.

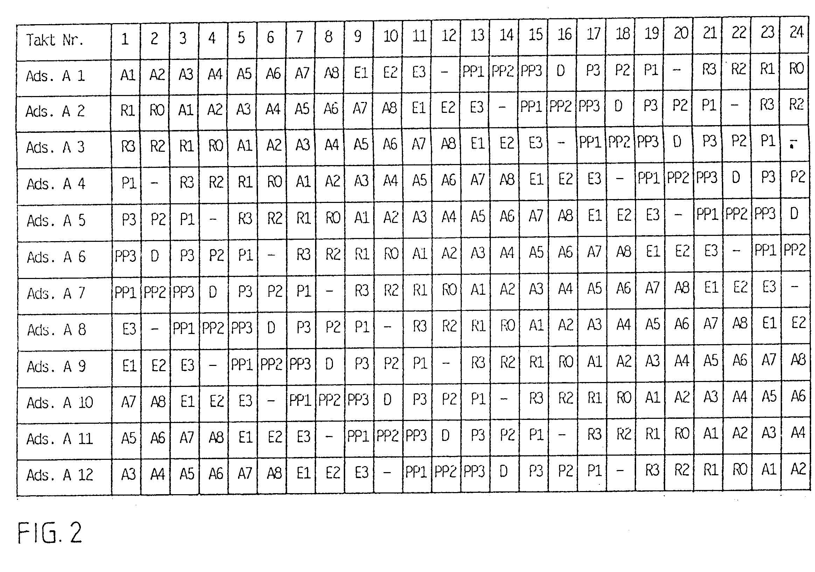

Kommt es nun zu einer Ventilstörung in einer der Druckausgleichs- und/oder Spülleitungen, so wird die zu diesem Ventil gehörende Ventillinie außer Betrieb genommen und die Anzahl der Druckausgleichs- und/oder Spülphasen um eins reduziert. Das Druckwechseladsorptionsverfahren arbeitet nun gemäß dem in der Figur 2 dargestellten Taktschema. Dieses Taktschema weist am Ende der Entspannungsphase sowie am Beginn der Bespannungsphase jeweils einen Leertakt auf. Je nachdem, welche der Druckausgleichs- und/oder Spülgasleitungen außer Betrieb genommen werden muß, entfällt einer der vier Entspannungstakte und damit einhergehend der korrespondierende Bespannungstakt.

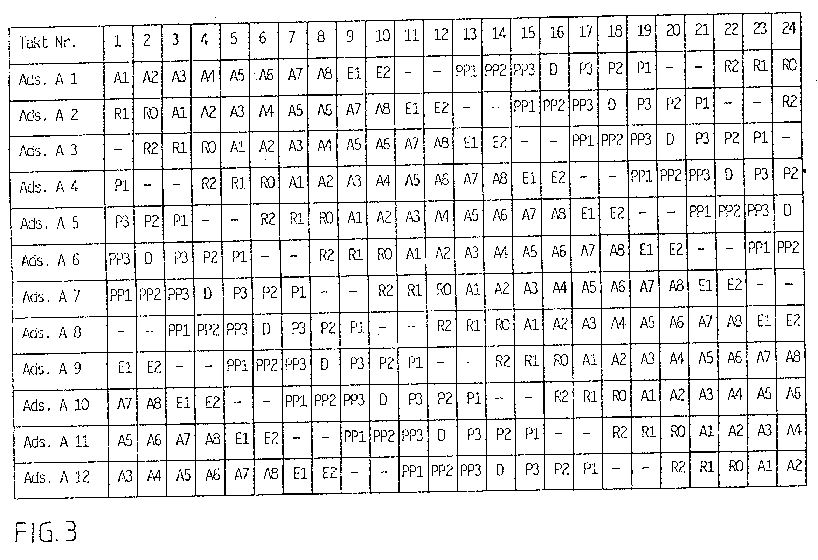

Kommt es zu einer weiteren Ventilstörung und damit zu einem Außer-Betrieb-Nehmen einer weiteren Druckausgleichs- und/oder Spülgasleitung, so wird, wie in dem Taktschema der Figur 3 dargestellt, die Anzahl der Druckausgleichs- und/oder Spülphasen um eins reduziert. Der erfindungswesentliche Gedanke ließe sich im Prinzip so weit fortsetzen, bis das Druckwechseladsorptionsverfahren ohne Entspannungs- und damit verbunden Bespannungsphasen arbeitet. In der Praxis ist, abhängig vom gewählten Verfahren, jedoch eine Grenze gegeben, die unter anderem von Faktoren, wie z.B. Adsorberkonstruktion, Strömungsgeschwindigkeiten, etc., abhängig ist.

## Patentansprüche

1. Kontinuierliches Druckwechseladsorptionsverfahren, mit mindestens zwei phasenverschoben arbeitenden Adsorptionseinheiten, wobei jede Adsorptionseinheit abwechselnd in den Arbeitszuständen "Adsorption" und "Desorption" mit einer oder mehreren zwischengeschalteten Druckausgleichs - und/oder Spülphasen betrieben wird, **dadurch gekennzeichnet**, daß beim Ausfall eines für eine Druckausgleichs - und/oder Spülphase benötigten Ventils, die zu diesem Ventil gehörende Ventillinie außer Betrieb genommen und die Anzahl der Druckausgleichs - und/oder Spülphasen um eine Phase reduziert wird.

## Claims

1. Continuous pressure-swing adsorption process having at least two adsorption units operating in a phase-shifted manner, each adsorption unit being operated alternately in the work states "adsorption" and "desorption" having one or more intermediate pressure-equilibration and/or purge phases, characterized in that in the event of the loss of a valve required for a pressure-equilibration and/or purge phase, the valve line belonging to this valve is taken out of operation and the number of the pressure-equilibration and/or purge phases is reduced by one phase.

## Revendications

1. Procédé continu d'adsorption à pression alternée, avec au moins deux unités d'adsorption travaillant en décalage de phase, dans lequel chaque unité d'adsorption fonctionne alternativement dans les états opérationnels "adsorption" et "désorption" avec une ou plusieurs phases intermédiaires d'égalisation de pression et/ou de purge, caractérisé en ce que, en cas de défaillance d'une vanne nécessaire pour une phase d'égalisation de pression et/ou de purge, la ligne de vannes comportant cette vanne est mise hors service et le nombre des phases d'égalisation de pression et/ou de purge est diminué d'une phase.
